# EUROPEAN PATENT APPLICATION

(11) **EP 2 066 086 A1**
(43) Date of publication of application: **03.06.2009**
(21) Application number: 07301597.6
(22) Date of filing: 29.11.2007
(51) Int. Cl.: H04L 12/56

(54) **Path computing element providing customized objective function**

(71) Applicant: Alcatel Lucent, 75008 Paris (FR)
(72) Inventor: Douville, Richard, 91310, LONGPONT SUR ORGE (FR); Lahoud, Samer, 75014, Paris (FR)
(74) Representative: Urlichs, Stefan

(57) **Abstract**

A method and related Path Computing Element for computing paths in a network is provided which has superior efficiency when customized objective functions are used. A Path Computation Client (PCC1) transmits a message to o Path Computing Element (PCE1) that specifies at least one rule defining how to perform path computation. The Path Computing Element (PCE1) stores this rule in a cache (36) under an assigned identifier. When the Path Computing Element later receives a Path Computation Request which contains the same identifier, it retrieves the corresponding rule from its cache (36) and processes the Path Computation Request using the retrieved rule.

## Description

### Field of the Invention

The present invention relates to the field of telecommunications and more particularly to a method and related apparatus for computing paths in a network using customized objective functions.

### Background of the Invention

Constraint-based path computation is a fundamental building block for traffic engineering systems such as Multiprotocol Label Switching (MPLS) and Generalized Multiprotocol Label Switching (GMPLS) networks. Path computation in large, multi-domain, multi-region, or multi-layer networks is complex and may require special computational components and cooperation between the different network domains. IETF standard RFC 4655, which is incorporated by reference herein, specifies an architecture for a Path Computation Element (PCE)-based model to address this problem space.

A Path Computation Element (PCE) is a network component that is capable of performing path computations at the request of Path Computation Clients (PCCs). The PCE is applied in Multiprotocol Label Switching Traffic Engineering (MPLS-TE) networks and in Generalized MPLS (GMPLS) networks to determine the routes of Label Switched Paths (LSPs) through the network.

The RFC4657, "Path Computation Element (PCE) Communication Protocol Generic Requirements", which is incorporated by reference herein, defines the objective functions supported by the PCE but specifies that other objective functions may be added to service specific applications. The document emphasizes that the requester of a path computation must be allowed to customize the function/options in use.

### Summary of the Invention

On the one hand, it is certainly an interesting feature to add directly in the path computation request specified by the PCC the function definition that is to be used by the PCE for path calculation. In addition to this, an operator may also wish to dynamically update/upgrade the potential objective function of its PCEs without service interruption.

On the other hand, the flexibility due to the customization of the objective function can raise the load of the PCEP protocol message on the control plane. Furthermore, one of the advantages of the PCE is its capability to pre-compute certain paths. Such pre-calculation, however, can only be done if the objective function to be used for calculation is known at the PCE.

Therefore, it is an object of the present invention to increase the efficiency of a method and related apparatus for computing paths in a network when using customized objective functions.

These and other objects that appear below are achieved by a method and related Path Computing Element for computing a route in a network. A Path Computation Client (PCC1) transmits a message to a Path Computing Element (PCE1) that specifies at least one rule defining how to perform path computation. The Path Computing Element (PCE1) stores this rule in a cache under an assigned identifier. When the Path Computing Element later receives a Path Computation Request which contains the same identifier, it retrieves the corresponding rule from its cache and processes the Path Computation Request using the retrieved rule.

### Brief Description of the Drawings

Preferred embodiments of the present invention will now be described with reference to the accompanying drawings in which
- Fig. 1: shows a schematic diagram of a data network in which the present invention is applied;
- Fig. 2: shows the data network of claim 1 after a set-up of a label switched path;
- Fig. 3: shows a detailed schematic diagram of a Path Computing Element (PCE) in accordance with the present invention and comprised in the data network of Fig. 1; and
- Fig. 4: shows a schematic block diagram of a network element in accordance with the present invention.

### Detailed Description of the Invention

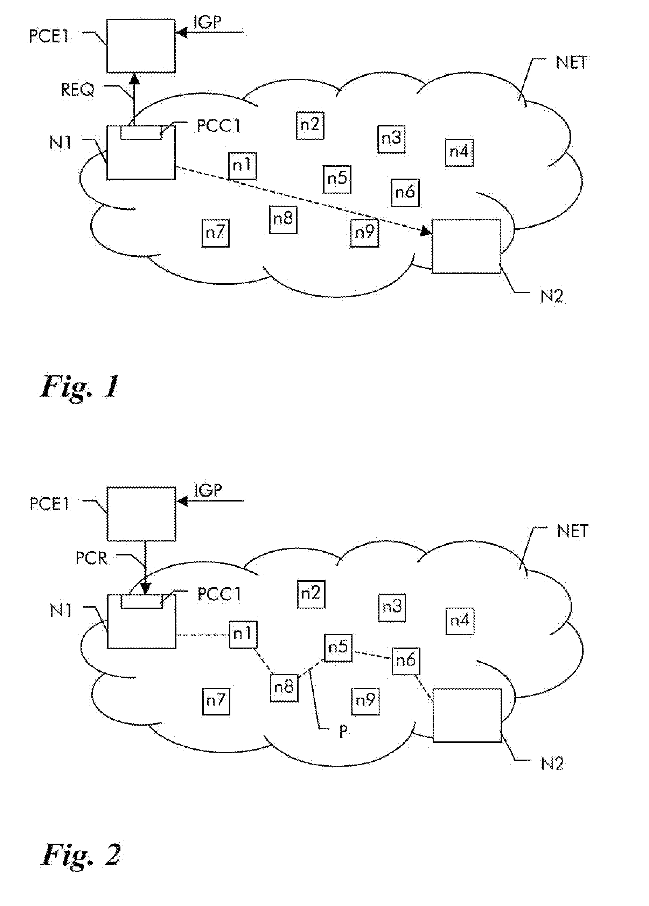

Figures 1 and 2 show a schematic diagram of a telecommunications network NET. It contains a first network node N1, a second network node N2 and number of intermediate network nodes n1-n9.

In the context of the present invention, telecommunications network NET can be identified with a label switched packet data network operated in accordance with the principles of Multiprotocol Label Switching (MPLS) or Generalised Multiprotocol Label Switching (GMPLS). Network paths are established as Label Switched Paths (LSPs) by means of an appropriate signaling protocol, known as such to those skilled in the art. A commonly known protocol which is appropriate in the context of the present invention is OSPF (Open Shortest Path First), which more generally can be referred to as an Interior Gateway Protocol (IGP). Other IGPs that could be used in the context of the present invention include IS-IS, RIP, and IGRP. An IGP uses a Link State Database (LSDB) or Traffic Engineering Database (TED) for routing purposes. Such data base comprises information which reflect the network topology.

Network node N1 has a Path computation client (PCC) function PCC1, which can address a Path Computing Element PCE1. PCE1 comprises a Traffic Engineering Database for path computing purposes.

Building this database and updating it in case of topology changes requires an exchange of Touting information between elements of the telecommunications network NET. In accordance with the OSPF protocol, the routing information are provided through flooding which occurs regularly based on an incompressible time interval.

In figure 1, PCE1 receives network topology and resource usage information via protocol IGP from other network devices (not shown). A Traffic Engineering Database (TED) is implemented in PCE1 and the information received via IGP is used to populate this database. For path setup and resource reservation, network nodes N1, N2, and n1-n9 in figure 1 comprise respective signaling engines (not shown in Fig. 1).

Network node N 1 is equipped with a Path computation client function PCC1, which can contact external Path Computation Elements. When N1 whishes to establish a path to network node N2, indicated as dashed arrow in figure 1, it sends a corresponding path computation request REQ from its PCC1 function to a PCE, which is by way of example in the present embodiment PCE1. It should be noted that in the general case, there can be more than one PCE and PCC1 can address different PCEs with requests. The choice of the addressed PCE for a particular computation request is beyond the scope of this application and can depend for example on configuration, load status of the PCEs, network knowledge of the PCEs, security choice, routing optimization algorithms available on PCEs, etc..

PCE1 computes a path P using the topology and resource information in its TED and returns the computed path in a path computation result PCR to PCC1, see figure 2. Network node N1 then established the computed path P through the network.

For the path computation process, the PCE uses an objective function which indicates one or more optimization criteria. An objective function is essentially a rule that indicates how the PCE shall perform the path computation, i.e. according to which criteria the PCE shall select the best path under several possible candidates. Multi-objective path computation shall also be possible.

The PCE communication protocol supports a list of generic objective functions, in particular;
- minimum cost path with respect to a specified metric,
- least loaded path,
- maximum available bandwidth path,
- minimum aggregate bandwidth consumption on all links,
- maximum residual bandwidth on the most loaded link, and
- minimum cumulative cost of a set of diverse paths.

Due to this variety, the PCC has to identify in its request the objective function to be used for the calculation. Alternatively, the PCC itself can specify a customized objective function. For multi-objective path computation, the PCC can also indicate or specify multiple objective functions to be used for path computation, either in combination, in parallel, or successively according to a certain order.

The present invention recognizes that a certain stability in the use of customized objective functions can be expected, i.e. that PCCs will probably reuse previous customized functions in further requests.

According to the present invention, the PCE stores a customized objective function received from a PCC in a cache under a certain identifier called hereinafter label. In further requests, the PCC can hence identify the previously used customized function using the label rather than specifying the function again. The PCE in turn can use cached customized functions for pre-computation of paths. The present invention provides therefore an opportunity for PCCs to register customized objective functions with a PCE.

In a preferred embodiment of the present invention, use is made of the PCE Communication Protocol (PCEP). Certain fields are added in the PCE Protocol to allow registering of a customized function under a label during the PCEP request message. Additionally, the PCC can also register constraints to be used together with the objective function under the some label. All definitions will be stored in the cache of the PCE. After the definition registration, when a PCC would like to re-use the some definition, it only passes its label in the PCEP request message and optionally some additional constraints.

In the following, an example will be given for the use of customized objective functions in accordance with the invention: Assume a PCC has a customized definition that it considers as stable. For instance the objective function can be to reduce the IGP cost divided by the available bandwidth with a delay always under 50ms. In its first Path Computation Request, the PCC defines this customized definition and enters in a new, specific field in its PCEP message the information that orders the registration of this definition in the PCE cache using a specified label. Another new field or the some one could be used to communicate the label under which the function shall be stored. Thus, in case of a re-use of this definition by the PCC in the future, the PCC will only add in the Path Computation Request the corresponding registered label and optionally specify further constraints, in the example given above for instance a minimum bandwidth of 100Mbit/s.

In another embodiment, when the PCE receives a request including a previously unknown customized function, it stores the function in the cache under a locally created label and returns the label back to the PCC, so that the PCC knows the label for future requests, Equally, when the PCC requests a path computation with a customized objective function that was previously used by another PCC and is therefore already known to the PCE, the latter will return the label under which the function was already stored to the requesting PCC. In another variant, the PCC can indicate the label to be used for storing a new objective function and the PCC creates, when the same function was already stored, some kind of shortcut or link, so that the objective function can be called by different PCCs with different labels.

It will be appreciated that several other variations and modifications of the above mechanism could be envisaged. For instance, the customized objective function can be sent to the PCE as part of a Path Computation Request when this function occurs for the first time or it can be sent by the PCC in a separate message. The label assigned in the PCE to the registered function can only be known to the PCC that has registered the function or can also be advertised to other PCCs for subsequent use under this label. Different labels can be assigned to the same function, when requested several times or a unique label can be assigned and communicated to the originating PCC.

The caching of objective functions will lead to a load reduction on the control plane. In addition, the PCE can take advantage of the function definitions in its cache to pre-compute some routes (e.g., when the request arrives to the PCE then the PCE filters the pre-computed routes for the function on the request constraints), prepare some path computation based on already defined constraints (e.g., graph pruning done before the request arrivals) and many more. Therefore, the caching function will improve the global PCE performances in therms of path computation on demand, re-organization of the network, graceful restart and many other aspects.

In the exemplary embodiment of figures 1 and 2 , a network architecture with only a single PCEs is shown. It will be appreciated by those skilled in the art that the present invention is by no means limited to such an architecture. Various other PCE architectures can be devised, as explained in detail in Section 5 of RFC 4655.

While for the sake of simplicity only node N1 is shown in figures 1 and 2 equipped with a PCC function, this is not necessarily the case, and the present invention also encompasses other architectures where multiple or all network elements have a PCC function.

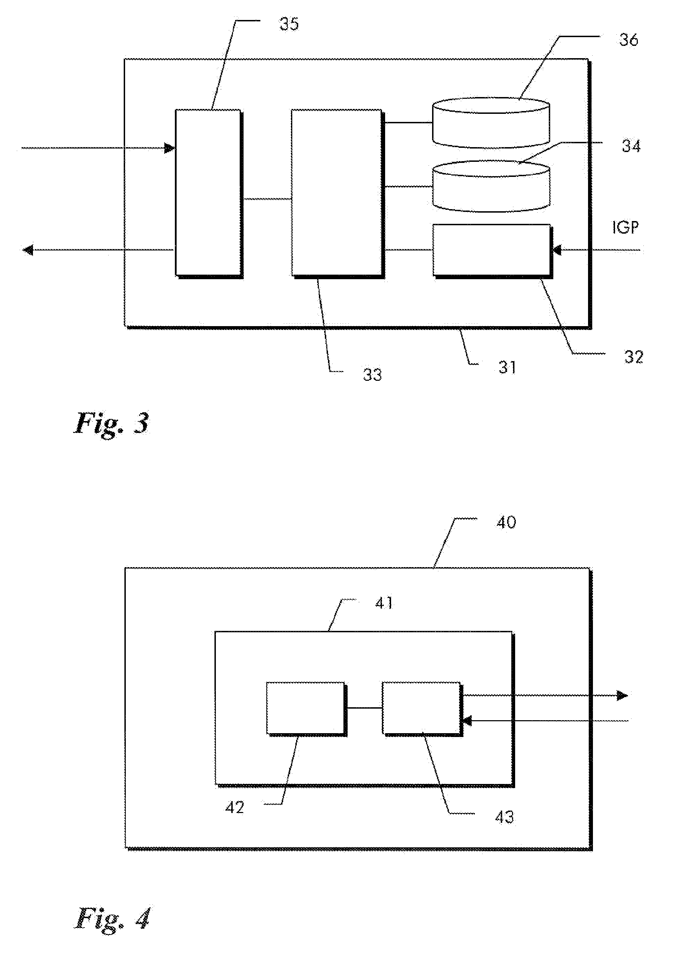

Figure 3 shows a detailed schematic diagram of a Path Computing Element (PCE) in accordance with the present invention and comprised in the data network of figure 1. PCE 31 has a control plane signaling engine 32 for receiving link state information from other entities in the network via control plane messages using an IGP such as OSPF-TE. PCE 31 stores the link state information in a Traffic Engineering Database (TED) 34. Furthermore, PCE 31 comprises processing means 33 for computing network paths based on the link state information stored in the TED 34. An interface 35 serves for the communication with a PCC via PCEP.

Path computation requests are received at interface 35 and transferred to processor 33, which computes a path corresponding to the request. The result is transferred back by interface 35 to the PCC.

According to the present invention, PCE 31 has a cache 36 for storing customized objective functions and a unique label for future use. It should be noted that the cache can be any kind of volatile of non-volatile memory or storage means. Even though cache 36 is shown in figure 3 logically distinct from TED 34, both can be stored in or on the same physical memory or storage means.

When a received path computation request includes a label of a previously registered customized function, processor 33 retrieves the objective function addressed by the label and uses this function for path calculation. Likewise, when received path computation request contains a customized objective function, the PCE stores the objective function in the cache 36 under a new label.

Fig. 4 shows a schematic block diagram of a network element in accordance with the present invention. As already mentioned above, network element N1, here generally depicted as network element 40, comprise a signaling engine 41 including first means 42 and second means 43. The first means 42 is devised for generating messages to inform other network elements in data network NET (figure 1) in case of a particular link reaching a respective predefined filling capacity or in case of a detected link failure. As will be appreciated by those skilled in the art, the above-mentioned functionality of said first means 42 corresponds to a functionality of standard Resource reSerVation Protocol-Traffic Engineering (RSVP-TE), which is one of the most important signaling protocols in the internet protocol suite.

As is generally known to those skilled in the art, RSVP includes sending a special message from a sender in a data network to a receiver, which message is called an RSVP Path Message. This type of message is employed for detecting a possible path from the sender to the receiver. Passed routers are logged and notified to the receiver. Along the path, the receiver sends a further message called RSVP Reservation Message. Routers along the path reserve resources according to the specification comprised in the RSVP Reservation Message or send back an error message. If the RSVP Reservation Message reaches the sender, the latter may rely on the reservations and establish the LSP.

The second means 43 is a PCEP interface, which serves for communication the with one or more PCEs. When a new path has to be established, network element 40 sends at PCEP interface 43 a path computation request to an associated PCE. When the PCE has computed a path, a proposal for the path will be received at interface 43.

Via PCEP interface 43, PCC 40 can send to a particular PCE a path computation requests including a customized objective function when such function is used for the first time, and including only a label under which this function is registered with the same PCE when the function is used again later on.

As will be appreciated those skilled in the art, the present invention is not necessarily limited to the use of the OSPF routing protocol: any other future standard protocol which is able to gather network information for the PCEs can be employed instead. Furthermore, the present invention is not limited to the use of existing RSVP messages for notifying the PCEs. As an alternative, Path Computation Element (PCE) Communication Protocol (PCEP) could be employed for the same purpose.

## Claims

**1.** A method of computing a route in a network, comprising the steps of:
- providing by a Path Computation Client (PCC1) to a Path Computing Element (PCE1) a message that specifies at least one rule defining how to perform path computation,
- at the Path Computing Element (PCE1) storing said rule in a cache (36) and assigning an identifier to said rule,
- when receiving a Path Computation Request comprising said identifier, retrieving the corresponding rule from said cache (36) and processing said Path Computation Request using said retrieved rule.

**2.** A method according to claim 1, wherein a first Path Computation Request contains said rule and wherein later Path Computation Requests contain only said identifier.

**4.** A method according to claim 1, wherein said Path Computing Element (PCE1) uses said cached rule for pre-computation of paths.

**5.** A method according to claim 1, wherein said rule is a customized objective function provided in the Path Computation Element Communication Protocol.

**6.** A method according to claim 5, wherein an additional field is added to the standard Path Computation Element Communication Protocol for registering of customized objective functions.

**7.** A method according to claim 1, wherein said Path Computing Element (PCE1) stores in its cache (36) under the same identifier constraints to be used together with said rule.

**8.** A method according to claim 1, wherein said Path Computation Client (PCC1) specifies in later Path Computation Requests in addition to said identifier additional constraints.

**9.** A Path Computing Element for computing a route in a network, comprising:
- an interface for receiving from a Path Computation Client (PCC1) to a Path Computing Element (PCE1) a message that specifies at least one rule defining how to perform path computation,
- a cache (36) for storing said rule under an assigned identifier, and
- processing means (33) for processing a Path Computation Request comprising said identifier, wherein said processing means are adapted to retrieve the rule corresponding to said identifier from said cache and to process said Path Computation Request using said relieved rule.
